# EUROPEAN PATENT SPECIFICATION

(11) **EP 2 953 244 B1**
(45) Date of publication and mention of the grant of the patent: **06.03.2019**
(21) Application number: 15168907.2
(22) Date of filing: 22.05.2015
(51) Int. Cl.: H02K 5/22, H02K 11/00, H02K 3/50, H02K 11/26

(54) **ROTATING ELECTRICAL MACHINE**
ELEKTRISCHE DREHMASCHINE
MACHINE ÉLECTRIQUE ROTATIVE

(30) Priority: 03.06.2014 JP 2014114497
(43) Date of publication of application: 09.12.2015
(73) Proprietor: Hitachi, Ltd., Tokyo 100-8280 (JP)
(72) Inventor: TSUJI, Yuji, Tokyo 100-8280 (JP); MAKI, Koji, Tokyo 100-8280 (JP); YOSHINARI, Yoshitaka, Tokyo 100-8280 (JP)
(74) Representative: MERH-IP Matias Erny Reichl Hoffmann Patentanwälte PartG mbB

(56) References cited:
- EP-A2- 0 751 026
- FR-A1- 2 247 003
- JP-A- 2000 125 498
- JP-A- 2014 064 420
- US-A1- 2007 247 016
- US-A1- 2008 084 128
- US-A1- 2011 074 241
- US-B1- 7 416 039

## Description

### Technical Field

The present invention relates to a rotating electrical machine and particularly relates to a high voltage electric motor for general industries.

### Background Art

As a conventional technology for attenuating/absorbing a steep surge voltage generated by operation of an inverter device when a rotating electrical machine is driven, there is a technology for providing a dV/dt suppression filter in an input port of an electric motor (see, for example, PTL 1).

Further, as a similar conventional technology for attenuating/absorbing a steep surge voltage, there is a technology in which, by covering a conductive member connected to a lead wire with an insulating member and passing the conductive member through a laminated core provided in a terminal block, an LC filter is formed by inductance and a stray capacitance of the conductive member, thereby absorbing a surge (see, for example, PTL 2).

### Citation List

### Patent Literatures

PTL 1: JP-A-6-38543
PTL 2: JP-A-2009-33923

US 2007/0247016 A1 relates to a tandem alternator that includes a rotary shaft, a first and a second power generation unit that are arranged in tandem in the axial direction of the rotary shaft, a housing, a slip ring-brush mechanism provided around a rear end portion of the rotary shaft, and a first and a second rectifier that are respectively fixed to a front and a rear end face of the housing, and a controller.

EP 0751026 A2 relates to an electric wheel motor mounted integrally in a wheel that has at least one electric leader line extending from the inside of a motor main body of the motor to the outside thereof.

US 2011/0074241 A1 relates to a rotating electrical machine including a core, a coil extending from the core, and an electromagnetic shield which is provided outside the core, and has a plurality of shoulders projecting toward the coil.

### Summary of Invention

### Technical Problems

In recent years, variable speed operation of a rotating electrical machine using an inverter device has been widely performed in view of energy saving. However, in a case where the rotating electrical machine is driven with the use of the inverter device, a voltage higher than that generated at the time of driving a conventional commercial frequency power supply is generated between coils included in the rotating electrical machine because of a steep surge voltage generated by operation of the inverter device.

To solve such a problem, provision of an external filter to attenuate/absorb a surge has been conventionally employed as a countermeasure in many cases. For example, PTL 1 discloses a technology for providing a dV/dt suppression filter in an input port of an electric motor. However, it is problematic in that a size of a whole rotating electrical machine system is increased and a cost thereof is increased.

PTL 2 discloses a technology in which, by covering a conductive member connected to a lead wire with an insulating member and passing the conductive member through a laminated core provided in a terminal block, an LC filter is formed by inductance and a stray capacitance of the conductive member, thereby absorbing a surge. However, it is problematic in that a terminal box of the rotating electrical machine is increased.

The invention has been made to solve the above problems that conventional technologies have, and an object thereof is to suppress a steep surge with a low-cost countermeasure without increasing a size of a rotating electrical machine.

### Solution to Problems

Outline of representative inventions among inventions disclosed in the present application is as follows.

That is, a rotating electrical machine according to claim 1 is provided

Alternatively, a rotating electrical machine according to claim 7 is provided.

### Advantageous Effects of Invention

According to the invention, by causing a lead wire part in a casing of a rotating electrical machine to have a filter function, it is possible to suppress a steep surge with a low-cost countermeasure without increasing a size of the rotating electrical machine. Brief Description of Drawings

Fig. 1a is a cross-sectional view of a rotating electrical machine according to Example 1 of the invention, which is a cross-sectional view in a direction in parallel with an axis of the rotating electrical machine.
Fig. 1b is a cross-sectional view of the rotating electrical machine according to Example 1 of the invention, which is a cross-sectional view in a radial direction of the rotating electrical machine.
Fig. 2 shows a whole configuration of a rotating electrical machine system including a rotating electrical machine of the invention.
Fig. 3 shows comparison between a measurement result of a shared voltage to a first coil of the rotating electrical machine according to Example 1 of the invention and a measurement result of a shared voltage to a coil of a conventional rotating electrical machine.
Fig. 4a is a cross-sectional view of a rotating electrical machine according to Example 2 of the invention, which is a cross-sectional view in a direction in parallel with an axis of the rotating electrical machine.
Fig. 4b is a cross-sectional view of the rotating electrical machine according to Example 2 of the invention, which is a cross-sectional view in a radial direction of the rotating electrical machine.
Fig. 5a is a cross-sectional view of a rotating electrical machine according to Example 3 of the invention, which is a cross-sectional view in a direction in parallel with an axis of the rotating electrical machine.
Fig. 5b is a cross-sectional view of the rotating electrical machine according to Example 3 of the invention, which is a cross-sectional view in a radial direction of the rotating electrical machine.
Fig. 6a is a cross-sectional view of a rotating electrical machine according to Example 4 of the invention, which is a cross-sectional view in a direction in parallel with an axis of the rotating electrical machine.
Fig. 6b is a cross-sectional view of the rotating electrical machine according to Example 4 of the invention, which is a cross-sectional view in a radial direction of the rotating electrical machine.
Fig. 7a is a cross-sectional view of a rotating electrical machine according to Example 5 of the invention, which is a cross-sectional view in a direction in parallel with an axis of the rotating electrical machine.
Fig. 7b is a cross-sectional view of the rotating electrical machine according to Example 5 of the invention, which is a cross-sectional view in a radial direction of the rotating electrical machine.
Fig. 8a is a cross-sectional view of a rotating electrical machine according to Example 6 of the invention, which is a cross-sectional view in a direction in parallel with an axis of the rotating electrical machine.
Fig. 8b is a cross-sectional view of the rotating electrical machine according to Example 6 of the invention, which is a cross-sectional view in a radial direction of the rotating electrical machine.

### Description of Embodiments

As described above, a rotating electrical machine according to claim 1, or according to claim 7 is provided. With this structure, inductance and a stray capacitance of the lead wire is increased and therefore an LC filter function of the lead wire can be reinforced. This makes it possible to suppress a steep surge voltage generated when the rotating electrical machine is driven.

In the above structure, a groove for fixing the lead wire may be provided in the stator core. In that case, it is preferable that the groove be a positioning groove used when the stator core is produced.

In the above structure, a conductive guide rail for fixing the lead wire may be provided between the outer circumferential surface of the stator core and the dielectric.

As example useful for understanding the invention, the lead wire may be extended in an axial direction along the outer circumferential surface of the stator core. The lead wire is extended in a circumferential direction along the outer circumferential surface of the stator core.

In the above structure, a hole penetrating the stator core in an axial direction may be provided to fix the lead wire.

In any one of the above structures, a cross-sectional shape of the lead wire may be flatter than a cross-sectional shape of the stator winding, and an end surface of the lead wire may be placed to face the outer circumferential surface of the stator core. Because the cross-sectional shape of the lead wire is flatter than the cross-sectional shape of the stator winding, an area is increased, and therefore it is preferable to place the end surface of the lead wire so that the end surface faces the inner circumferential surface of the casing.

In any one of the above structures, it is more preferable to reinforce insulation of the lead wire. For example, in the above structure, it is preferable to set a withstand voltage of insulation of the lead wire so that the withstand voltage is equal to or larger than a voltage reduced in the lead wire.

In the rotating electrical machine of the invention, a lead wire is placed to face the outer circumferential surface of the stator core provided in the casing of the rotating electrical machine or the inner circumferential surface of the casing of the rotating electrical machine. By causing a lead wire part in the casing of the rotating electrical machine to have a filter function, it is possible to suppress a steep surge with a low-cost countermeasure without increasing a size of the rotating electrical machine.

. Hereinafter, examples of the invention will be described with reference to drawings. Note that, in all the drawings for describing the examples, the same members are basically denoted by the same reference signs and repeated explanation thereof is omitted.

### <Whole configuration>

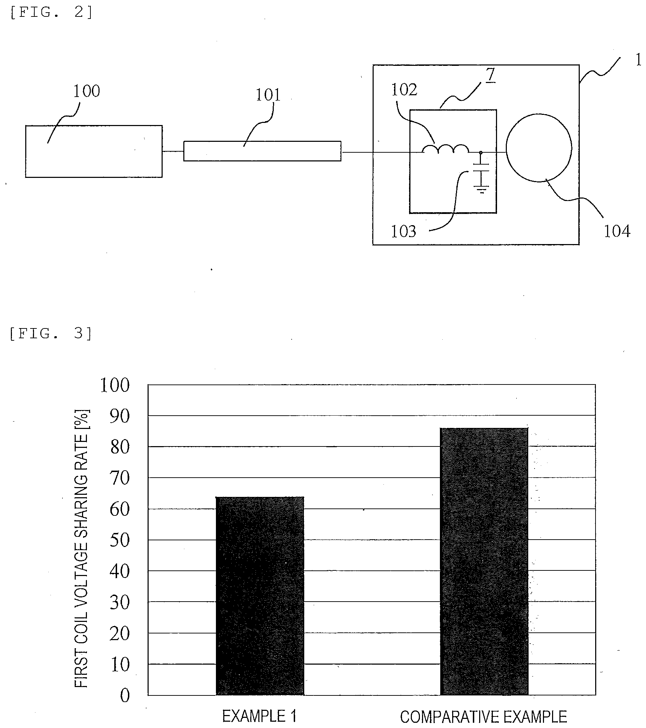

Fig. 2 shows a configuration of a rotating electrical machine system including a rotating electrical machine of the invention. As illustrated in Fig. 2, a rotating electrical machine 1 (for example, motor) according to examples of the invention receives power supply via a lead wire 7 of the rotating electrical machine from an inverter device 100 connected to a cable 101. Inductance 102 and a stray capacitance 103 of the lead wire form a filter to suppress a steep surge.

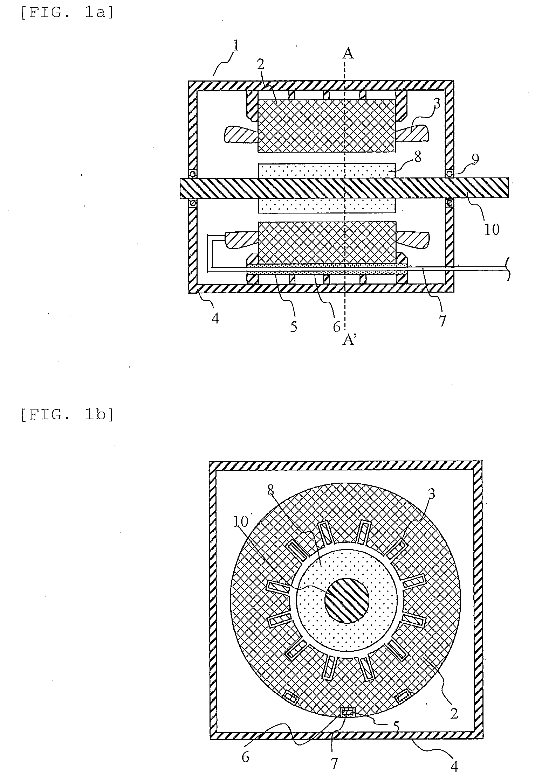

Fig. 1a and Fig. 1b are structural views illustrating an example of a rotating electrical machine not forming part of the present invention. Fig. 1a is a cross-sectional view in a direction in parallel with an axis of the rotating electrical machine 1, and Fig. 1b is a cross-sectional view in a direction orthogonal to the axis of the rotating electrical machine 1-.

As illustrated in Fig. 1a, a casing 4 of the rotating electrical machine 1 includes a stator for forming a rotating magnetic field with the use of a three-phase alternating current voltage and a rotor 8 rotated in accordance with the rotating magnetic field formed by the stator. The stator includes a stator core 2 and stator windings 3 wound around the stator core 2. The rotor 8 is fixed by a shaft 10, and the shaft 10 is pivotably supported by bearings 9 so as to be rotatable. As illustrated in Fig. 1b, coil slots are provided at predetermined intervals on an inner circumference side of the stator core 2, and the stator windings 3 are wound around the coil slots. As illustrated in Fig. 1a and Fig. 1b, a periphery of the lead wire 7 for supplying power, the lead wire 7 being connected to the stator winding 3, is covered with an insulating member 5, and the lead wire is placed in a groove 6 provided in an axial direction in an outer circumferential surface of the stator core. In this case, a withstand voltage of the insulating member needs to be equal to or larger than a voltage generated in the lead wire, and therefore the withstand voltage is set to have an insulation level that is equal to or larger than that of the stator winding. Further, the stray capacitance of the lead wire may be further increased by forming a cross-sectional shape of the lead wire so that the cross-sectional shape is flatter than that of the stator winding to increase a facing area with the stator core. From the above, according to the rotating electrical machine of the invention, the inductance and the stray capacitance of the lead wire in the casing of the rotating electrical machine are increased, and therefore it is possible to suppress a steep surge with a low-cost countermeasure without increasing the size of the rotating electrical machine.

Fig. 3 shows measurement results of a first coil shared voltage rate of the rotating electrical machine of Example 1 and a first coil shared voltage rate of a conventional rotating electrical machine. Fig. 3 shows the measurement result of the shared voltage rate of the first coil (Fig. 3, Example 1) in the above conditions by applying a step voltage having a rise time of 0.1 µs as an inverter power supply, setting the inductance of the lead wire to 4.7 µH, and setting the stray capacitance with the stator core to 2600 pF. In the measurement result (Fig. 3, Example 1), the shared voltage of the first coil is indicated as a rate assuming that a peak value of the step voltage is 100%. Further, in a case of the conventional rotating electrical machine in which a lead wire is not placed to face a stator core via a dielectric, inductance of the lead wire is 0.2 µH, a stray capacitance with the stator core is 3 pF, and the measurement result (Fig. 3, Comparative Example) at that time is shown. As illustrated in Fig. 3, a voltage sharing rate of the first coil in Comparative Example is 86%. A voltage sharing rate in Example 1 is 64%, and therefore it is possible to reduce the shared voltage rate of the first coil by 22%, as compared with Comparative Example 1.

According to this example, by causing the lead wire part in the casing of the rotating electrical machine to have the filter function, it is possible to suppress a steep surge with a low-cost countermeasure without increasing the size of the rotating electrical machine.

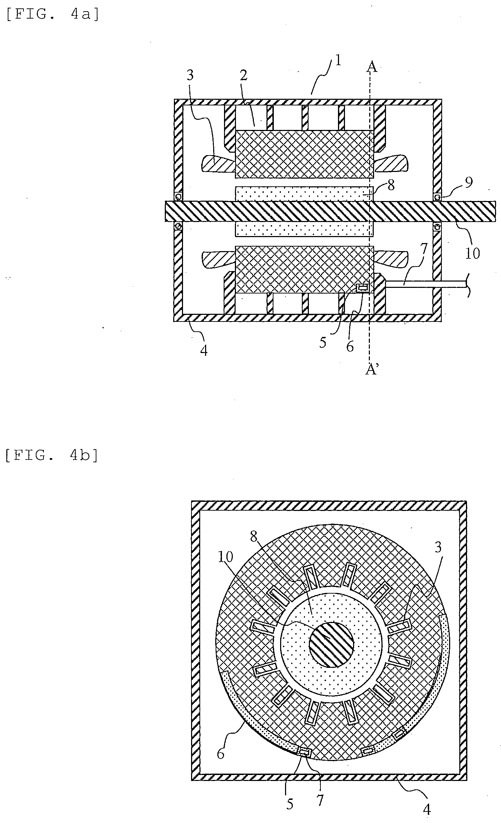

Fig. 4a and Fig. 4b are structural views illustrating Example 1 of the rotating electrical machine of the invention. Fig. 4a is a cross-sectional view in the direction in parallel with the axis of the rotating electrical machine 1, and Fig. 4b is a cross-sectional view in the direction orthogonal to the axis of the rotating electrical machine 1. Example 1 is different from the previously mentioned illustrative example in that the lead wire is extended in a circumferential direction of the outer circumferential surface of the stator core.

In Fig. 4a and Fig. 4b, in order to fix the lead wire 7 covered with the insulating member 5, the lead wire is placed in the groove 6 provided in the circumferential direction in the outer circumferential surface of the stator core.

According to this example, by causing the lead wire part in the casing of the rotating electrical machine to have the filter function, it is possible to suppress a steep surge with a low-cost countermeasure without increasing the size of the rotating electrical machine. In particular, it is possible to have a long distance, as compared with a case where the lead wire is extended in the axial direction. Therefore, a larger surge suppression effect can be expected.

### [Example 3]

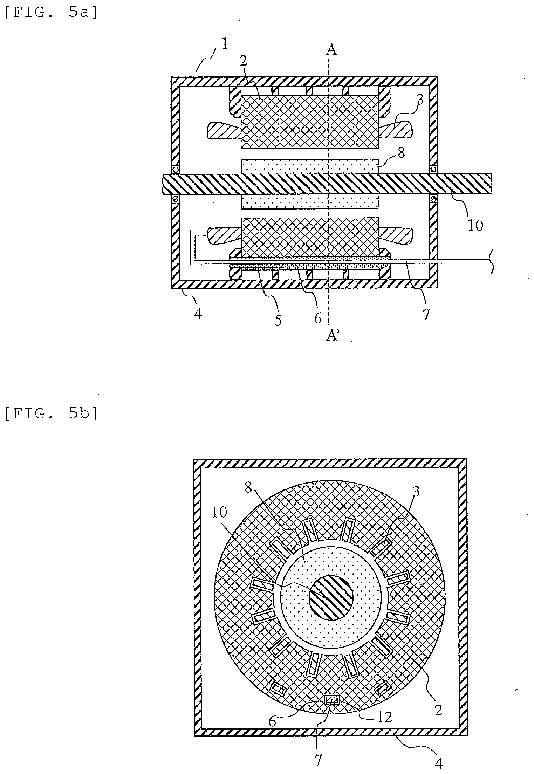

Fig. 5a and Fig. 5b are structural views illustrating another example of an electrical machine not forming part of the present invention. Fig. 5a is a cross-sectional view in the direction in parallel with the axis of the rotating electrical machine 1, and Fig. 5b is a cross-sectional view in the direction orthogonal to the axis of the rotating electrical machine 1. Example 3 is different from Example 1 in that the lead wire is extended in a hole 12 penetrating the stator core in the axial direction.

In Fig. 5a and Fig. 5b, in order to fix the lead wire 7 covered with the insulating member 5, the lead wire is placed in the hole 12 penetrating the stator core in the axial direction.

According to this example, by causing the lead wire part in the casing of the rotating electrical machine to have the filter function, it is possible to suppress a steep surge with a low-cost countermeasure without increasing the size of the rotating electrical machine. In particular, because all four surfaces of the lead wire face the stator core via the insulating member, the inductance and the stray capacitance are increased, and therefore a larger surge suppression effect can be expected.

### [Example 4]

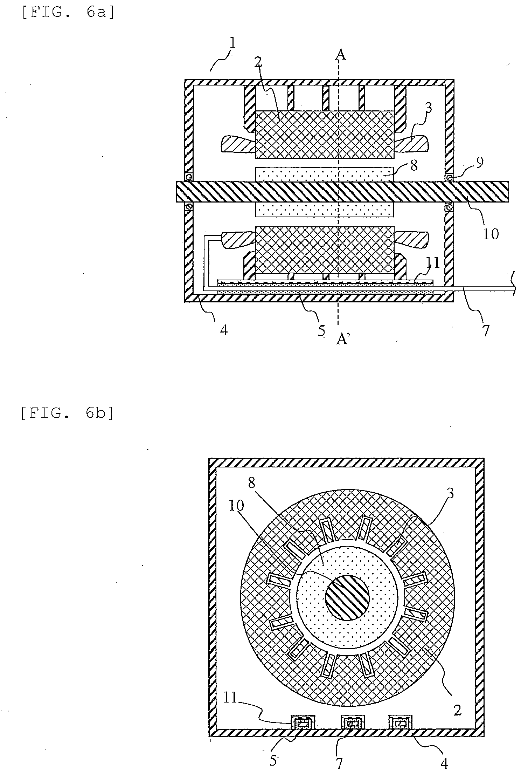

Fig. 6a and Fig. 6b are structural views illustrating Example 2 of the rotating electrical machine of the invention. Fig. 6a is a cross-sectional view in the direction in parallel with the axis of the rotating electrical machine 1, and Fig. 6b is a cross-sectional view in the direction orthogonal to the axis of the rotating electrical machine 1. Example 4 is different from Example 1 in that the lead wire is placed along an axial direction of an inner circumferential surface of the casing of the rotating electrical machine so as to face the inner circumferential surface.

In Fig. 6a and Fig. 6b, in order to fix the lead wire 7 covered with the insulating member 5, a conductive guide rail 11 is extended in the axial direction on the inner circumferential surface of the casing 4 of the rotating electrical machine, and the lead wire is placed to face the guide rail.

According to this example, by causing the lead wire part in the casing of the rotating electrical machine to have the filter function, it is possible to suppress a steep surge with a low-cost countermeasure without increasing the size of the rotating electrical machine. In particular, it is unnecessary to form the groove in the outer circumferential surface of the stator core. This makes it possible to easily produce the rotating electrical machine.

### Example 3.

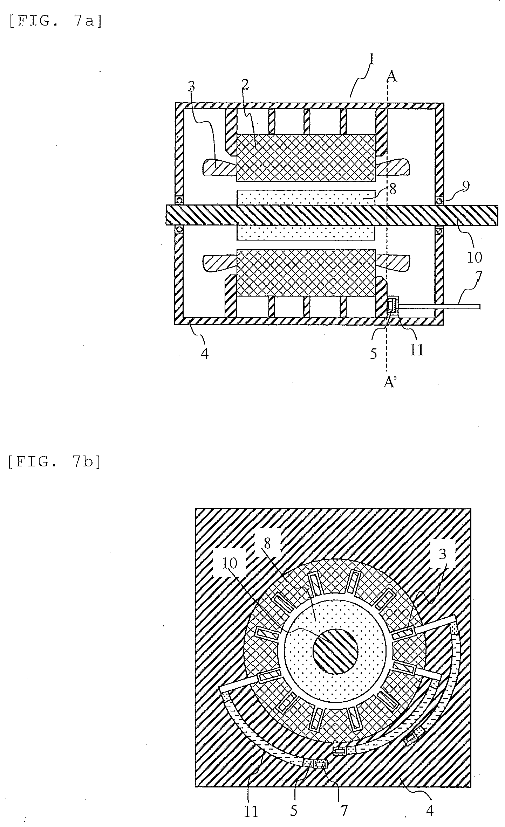

Fig. 7a and Fig. 7b are structural views illustrating Example 3 of the rotating electrical machine of the invention. Fig. 7a is a cross-sectional view in the direction in parallel with the axis of the rotating electrical machine 1, and Fig. 7b is a cross-sectional view in the direction orthogonal to the axis of the rotating electrical machine 1.

In Fig. 7a and Fig. 7b, in order to fix the lead wire 7 covered with the insulating member 5, the conductive guide rail 11 is extended in the circumferential direction of the casing of the rotating electrical machine along a surface direction of an inner casing plate of the casing 4 of the rotating electrical machine, and the lead wire is placed to face the guide rail.

According to this example, by causing the lead wire part in the casing of the rotating electrical machine to have the filter function, it is possible to suppress a steep surge with a low-cost countermeasure without increasing the size of the rotating electrical machine.

### Example 4.

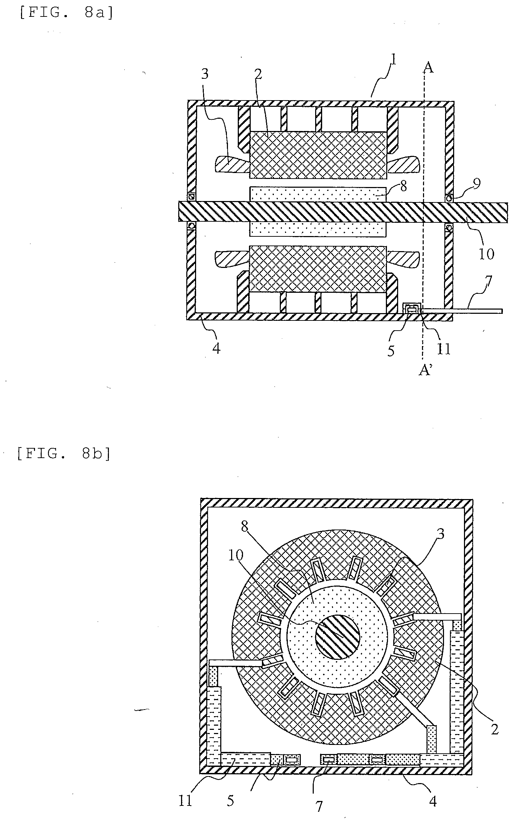

Fig. 8a and Fig. 8b are structural views illustrating Example 4 of the rotating electrical machine of the invention. Fig. 8a is a cross-sectional view in the direction in parallel with the axis of the rotating electrical machine 1, and Fig. 8b is a cross-sectional view in the direction orthogonal to the axis of the rotating electrical machine 1.

In Fig. 8a and Fig. 8b, in order to fix the lead wire 7 covered with the insulating member 5, the conductive guide rail 11 is extended in the circumferential direction of the casing of the rotating electrical machine along the surface direction of the casing 4 of the rotating electrical machine, and the lead wire is placed to face the guide rail.

According to this example, by causing the lead wire part in the casing of the rotating electrical machine to have the filter function, it is possible to suppress a steep surge with a low-cost countermeasure without increasing the size of the rotating electrical machine.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

### Reference Signs List

- 100: inverter
- 101: cable
- 102: inductance
- 103: stray capacitance
- 1: rotating electrical machine
- 2: stator core
- 3: stator winding
- 4: casing of rotating electrical machine
- 5: insulating member
- 6: groove
- 7: lead wire
- 8: rotor
- 9: bearing
- 10: shaft
- 11: guide rail
- 12: hole

## Claims

1. A rotating electrical machine (1), comprising:
a rotor (8);
a stator winding (3);
a lead wire (7) connected to supply power to the stator winding (3);
a stator core (2) around which the stator winding (3) is wound; and
a casing housing the stator core (2), wherein:
the lead wire (7) is placed to face an outer circumferential surface of the stator core (2) via a dielectric along a surface direction, **characterized in that** the stator core is ground; and
the lead wire (7) is extended in a circumferential direction along the outer circumferential surface of the stator core (2).

2. The rotating electrical machine (1) according to claim 1, wherein
a groove for fixing the lead wire (7) is provided in the stator core (2).

3. The rotating electrical machine (1) according to claim 2, wherein
the groove is a positioning groove used when the stator core (2) is produced.

4. The rotating electrical machine (1) according to claim 1, wherein
a conductive guide rail (11) for fixing the lead wire (7) is provided between the outer circumferential surface of the stator core (2) and the dielectric.

5. The rotating electrical machine (1) according to claim 1, wherein
a hole penetrating the stator core (2) in an axial direction is provided to fix the lead wire (7).

6. The rotating electrical machine (1) according to any one of claims 1 to 5, wherein:
a cross-sectional shape of the lead wire (7) is flatter than a cross-sectional shape of the stator winding; and
an end surface of the lead wire (7) is placed to face the outer circumferential surface of the stator core (2).

7. A rotating electrical machine (1), comprising:
a rotor (8);
a stator winding (3);
a lead wire (7) connected to supply power to the stator winding(3) ;
a stator core (2) around which the stator winding (3) is wound; and
a conductive casing housing the stator core (2), wherein:
the lead wire (7) is placed to face an inner circumferential surface of the casing via a dielectric along a surface direction, **characterized in that** the casing is ground; and
a conductive guide rail for fixing the lead wire (7) is provided between the inner circumferential surface of the casing and the dielectric.

8. The rotating electrical machine (1) according to claim 7, wherein
a groove for fixing the lead wire (7) is provided in the casing.

9. The rotating electrical machine (1) according to claim 7, wherein
the lead wire (7) is extended in an axial direction along the inner circumferential surface of the casing.

10. The rotating electrical machine (1) according to claim 7, wherein
the lead wire (7) is extended in a circumferential direction along the inner circumferential surface of the casing.

11. The rotating electrical machine (1) according to any one of claims 7 to 10, wherein:
a cross-sectional shape of the lead wire (7) is flatter than a cross-sectional shape of the stator winding; and
an end surface of the lead wire (7) is placed to face the inner circumferential surface of the casing.

## Patentansprüche

1. Drehende Elektromaschine (1), die Folgendes enthält:
einen Rotor (8);
eine Statorwicklung (3);
einen Leitungsdraht (7), der derart angeschlossen ist, dass er der Statorwicklung (3) Leistung zuführt;
einen Statorkern (2), um den die Statorwicklung (3) gewickelt ist; und
ein Gehäuse, in dem der Statorkern (2) untergebracht ist, wobei
der Leitungsdraht (7) derart angeordnet ist, dass er einer Außenumfangsfläche des Statorkerns (2) über ein Dielektrikum in einer Flächenrichtung zugewandt ist,
**dadurch gekennzeichnet, dass**
der Statorkern geerdet ist; und
der Leitungsdraht (7) in einer Umfangsrichtung entlang der Außenumfangsfläche des Statorkerns (2) verläuft.

2. Drehende Elektromaschine (1) nach Anspruch 1, wobei
eine Nut, um den Leitungsdraht (7) zu befestigen, im Statorkern (2) vorgesehen ist.

3. Drehende Elektromaschine (1) nach Anspruch 2, wobei
die Nut eine Positioniernut ist, die verwendet wird, wenn der Statorkern (2) hergestellt wird.

4. Drehende Elektromaschine (1) nach Anspruch 1, wobei
eine leitende Führungsschiene (11) zum Befestigen des Leitungsdrahtes (7) zwischen der Außenumfangsfläche des Statorkerns (2) und dem Dielektrikum vorgesehen ist.

5. Drehende Elektromaschine (1) nach Anspruch 1, wobei
ein Loch, das den Statorkern (2) in einer Axialrichtung durchdringt, vorgesehen ist, um den Leitungsdraht (7) zu befestigen.

6. Drehende Elektromaschine (1) nach einem der Ansprüche 1 bis 5, wobei
eine Querschnittsform des Führungsdrahtes (7) flacher als eine Querschnittsform der Statorwicklung ist und
eine Stirnfläche des Führungsdrahtes (7) der Außenumfangsfläche des Statorkerns (2) zugewandt angeordnet ist.

7. Drehende Elektromaschine (1), die Folgendes enthält:
einen Rotor (8);
eine Statorwicklung (3);
einen Leitungsdraht (7), der derart angeschlossen ist, dass er der Statorwicklung (3) Leistung zuführt;
einen Statorkern (2), um den die Statorwicklung (3) gewickelt ist; und
ein leitendes Gehäuse, in dem der Statorkern (2) untergebracht ist, wobei
der Leitungsdraht (7) derart angeordnet ist, dass er einer Innenumfangsfläche des Gehäuses über ein Dielektrikum in einer Flächenrichtung zugewandt ist,
**dadurch gekennzeichnet, dass**
das Gehäuses geerdet ist; und
eine leitende Führungsschiene zum Befestigen des Leitungsdrahtes (7) zwischen der Innenumfangsfläche des Gehäuses und dem Dielektrikum vorgesehen ist.

8. Drehende Elektromaschine (1) nach Anspruch 7, wobei
eine Nut, um den Leitungsdraht (7) zu befestigen, im Gehäuse vorgesehen ist.

9. Drehende Elektromaschine (1) nach Anspruch 7, wobei
der Leitungsdraht (7) in einer Axialrichtung entlang der Innenumfangsfläche des Gehäuses verläuft.

10. Drehende Elektromaschine (1) nach Anspruch 7, wobei
der Leitungsdraht (7) in einer Umfangsrichtung entlang der Innenumfangsfläche des Gehäuses verläuft.

11. Drehende Elektromaschine (1) nach einem der Ansprüche 7 bis 10, wobei
eine Querschnittsform des Führungsdrahtes (7) flacher als eine Querschnittsform der Statorwicklung ist und
eine Stirnfläche des Führungsdrahtes (7) der Innenumfangsfläche des Gehäuses zugewandt angeordnet ist.

## Revendications

1. Machine électrique rotative (1), comprenant :
un rotor (8) ;
un enroulement de stator (3) ;
un fil de liaison (7) connecté pour alimenter en puissance l'enroulement de stator (3) ;
un noyau de stator (2) autour duquel l'enroulement de stator (3) est enroulé ; et
un boîtier recevant le noyau de stator (2), dans laquelle :
le fil de liaison (7) est placé de manière à faire face à une surface circonférentielle extérieure du noyau de stator (2) par l'intermédiaire d'un diélectrique le long d'une direction de la surface,
**caractérisée en ce que** le noyau de stator est mis à la terre ; et
le fil de liaison (7) est étendu dans une direction circonférentielle le long de la surface circonférentielle extérieure du noyau de stator (2).

2. Machine électrique rotative (1) selon la revendication 1, dans laquelle une rainure pour fixer le fil de liaison (7) est prévue dans le noyau de stator (2).

3. Machine électrique rotative (1) selon la revendication 2, dans laquelle la rainure est une rainure de positionnement utilisée quand le noyau de stator (2) est produit.

4. Machine électrique rotative (1) selon la revendication 1, dans laquelle un rail de guidage conducteur (11) pour fixer le fil de liaison (7) est prévu entre la surface circonférentielle extérieure du noyau de stator (2) et le diélectrique.

5. Machine électrique rotative (1) selon la revendication 1, dans laquelle un trou pénétrant le noyau de stator (2) dans une direction axiale est prévu pour fixer le fil de liaison (7).

6. Machine électrique rotative (1) selon l'une quelconque des revendications 1 à 5, dans laquelle :
une forme de section transversale du fil de liaison (7) est plus plate qu'une forme de section transversale de l'enroulement de stator ; et
une surface terminale du fil de liaison (7) est placée de manière à faire face à la surface circonférentielle extérieure du noyau de stator (2).

7. Machine électrique rotative (1) comprenant :
un rotor (8) ;
un enroulement de stator (3) ;
un fil de liaison (7) connecté pour alimenter en puissance l'enroulement de stator (3) ;
un noyau de stator (2) autour duquel l'enroulement de stator (3) est enroulé ; et
un boîtier conducteur recevant le noyau de stator (2), dans laquelle :
le fil de liaison (7) est placé de manière à faire face à une surface circonférentielle intérieure du boîtier par l'intermédiaire d'un diélectrique le long d'une direction de la surface, **caractérisée en ce que** le boîtier est mis à la terre ; et
un rail de guidage conducteur pour fixer le fil de liaison (7) est prévu entre la surface circonférentielle intérieure du boîtier et le diélectrique.

8. Machine électrique rotative (1) selon la revendication 7, dans laquelle une rainure pour fixer le fil de liaison (7) est prévue dans le boîtier.

9. Machine électrique rotative (1) selon la revendication 7, dans laquelle le fil de liaison (7) est étendu dans une direction axiale le long de la surface circonférentielle intérieure du boîtier.

10. Machine électrique rotative (1) selon la revendication 7, dans laquelle le fil de liaison (7) est étendu dans une direction circonférentielle le long de la surface circonférentielle intérieure du boîtier.

11. Machine électrique rotative (1) selon l'une, quelconque des revendications 7 à 10, dans laquelle :
une forme de section transversale du fil de liaison (7) est plus plate qu'une forme de section transversale de l'enroulement de stator ; et
une surface terminale du fil de liaison (7) est placée de manière à faire face à la surface circonférentielle intérieure du boîtier.
